# EUROPÄISCHE PATENTSCHRIFT

(11) **EP 1 015 860 B1**
(45) Veröffentlichungstag und Bekanntmachung des Hinweises auf die Patenterteilung: **29.10.2003**
(21) Anmeldenummer: 98948797.0
(22) Anmeldetag: 14.08.1998
(51) Int. Cl.: G01L 9/06, G01P 15/12

(54) **HALBLEITERSENSOR MIT EINEM GRUNDKÖRPER UND WENIGSTENS EINEM VERFORMUNGSKÖRPER**
SEMICONDUCTOR DETECTOR WITH A BASE STRUCTURE AND AT LEAST ONE DEFORMABLE BODY
CAPTEUR A SEMI-CONDUCTEUR POURVU D'UN CORPS DE BASE ET D'AU MOINS UN CORPS DEFORMABLE

(30) Priorität: 19.09.1997 DE 19741428
(43) Veröffentlichungstag der Anmeldung: 05.07.2000
(73) Patentinhaber: Infineon Technologies AG, 81669 München (DE)
(72) Erfinder: BEVER, Thomas, D-81739 München (DE); SCHMITT, Stephan, D-81541 München (DE); EHRLER, Günter, D-83607 Holzkirchen (DE)
(74) Vertreter: Graf Lambsdorff, Matthias, Dr.
(86) Internationale Anmeldenummer: DE9802356
(87) Internationale Veröffentlichungsnummer: WO99015868

(56) Entgegenhaltungen:
- EP-A- 0 672 899
- WO-A-96/19719
- DE-A- 3 743 080
- FR-A- 2 201 464
- US-A- 4 891 984
- US-A- 5 549 006

## Beschreibung

Die Erfindung betrifft einen Halbleitersensor mit einem Grundkörper und wenigstens einem Verfonnungskörper, wobei der Verformungskörper aus einem Halbleitersubstrat besteht, das mit einem Dotierstoff eines ersten Leitfähigkeitstyps dotiert ist, und wobei sich in dem Verformungskörper wenigstens ein Piezowiderstand, der mit einem Dotierstoff mit entgegengesetztem Leitfähigkeitstyp dotiert ist, befindet, und wobei der Verformungskörper in wenigstens einem Teilbereich seiner Oberfläche in Kontakt mit einem Medium steht.

Ein Halbleitersensor ist ein Sensor, der mit Hilfe von aus der Mikroelektronik bekannten Prozeßschritten herstellbar ist. Durch die Herstellbarkeit mit aus der Mikroelektronik bekannten Verfahrensschritten ist es möglich, einen gattungsgemäßen Halbleitersensor mit einer elektronischen Schaltung zu verbinden, oder in diese zu integrieren. Die bekannten gattungsgemäßen Halbleitersensoren sind als piezoresistive Drucksensoren für Absolut-, Relativ- und Differenzdruckmessungen ausgebildet. Zur Erreichung einer hohen Empfindlichkeit muß der Verformungskörper, beispielsweise eine SiliziumMembran, eine möglichst große Ausdehnung (Kantenlänge oder Radius) und eine möglichst geringe Dicke aufweisen.

Aus der Druckschrift US 5,549,006 ist ein Drucksensor bekannt, bei dem als Verformungskörper eine einzige p-dotierte SiC-Schicht auf einem n-dotierten SiC-Grundkörper ausgebildet ist. Auf der p-dotierten SiC-Schicht sind Piezowiderstände angeordnet. Der Grundkörper weist einen freigeätzten Bereich auf, wodurch die p-dotierte SiC-Schicht des Verformungskörpers in Kontakt mit einem Medium gebracht werden kann.

Weiterhin ist aus der Druckschrift WO 96/19719 ein Drucksensor bekannt, bei dem ein Verformungskörper aus einem Schichtensystem mit einer Poly-Siliziumschicht und zwei darüber angeordneten dielektrischen Schichten gebildet wird. Auf der oberen der dielektrischen Schichten sind Piezosensoren angeordnet. Die Poly-Siliziumschicht ist auf einem Grundkörper derart angeordnet, dass ein Teilbereich der Poly-Siliziumschicht mit einem Medium in Kontakt gebracht werden kann.

Wegen der großen Flächenausdehnung des Verformungskörpers sind der Materialverbrauch und der Herstellungsaufwand groß. Dies gilt insbesondere bei Halbleitersensoren zur Messung kleiner Drücke oder Druckdifferenzen oder von geringen Beschleunigungsänderungen.

Der Erfindung liegt die Aufgabe zugrunde, einen gattungsgemäßen Halbleitersensor zu schaffen, der die Nachteile des Standes der Technik überwindet. Ein derartiger Halbleitersensor soll vorzugsweise möglichst kleine Flächenabmessungen des Verformungskörpers und eine möglichst hohe Empfindlichkeit aufweisen.

Erfindungsgemäß wird diese Aufgabe dadurch gelöst, daß ein gattungsgemäßer Halbleitersensor so ausgestaltet wird, daß der Teilbereich eine niedrigere Konzentration des Dotierstoffs aufweist als ein zwischen ihm und dem Piezowiderstand befindlicher weiterer Bereich.

Die Erfindung sieht also vor, einen Halbleitersensor zu erschaffen, bei dem die Konzentration des Dotierstoffes zwischen der piezoresistiven Widerstandsbahn und einer freien Oberfläche des Verformungskörpers variiert.

Die freie Oberfläche des Verformungskörpers kann sich in Kontakt mit einem beliebigen Medium befinden. Das Medium kann hierbei sowohl gasförmig als auch flüssig oder fest sein. Es ermöglicht eine Verformung des Verformungskörpers oder es wirkt so auf den Verformungskörper ein, daß dieser sich verformt. Hierbei kann es sich beispielsweise um ein Medium handeln, dessen Eigenschaften erfaßt werden sollen, wie es beispielsweise bei einem Drucksensor der Fall ist. Es ist jedoch gleichfalls möglich, daß das Medium lediglich die Funktion hat, eine Auslenkung des Verformungskörpers zu ermöglichen, wie beispielsweise bei einem Beschleunigungssensor. In beiden Fällen weist die freie Oberfläche des Verformungskörpers eine geringere Konzentration des Dotierstoffes auf als wenigstens ein zwischen ihr und dem Piezowiderstand, der beispielsweise eine piezoresistive Widerstandsbahn ist, liegender Bereich.

Der erfindungsgemäße Halbleitersensor weist eine hohe Spannungsfestigkeit auf, das heißt die elektrische Durchbruchspannung ist erhöht. Wegen der höheren Spannungsfestigkeit kann ein Strom mit höherer Stromstärke durch den Piezowiderstand fließen. Die sich hierbei bildende höhere Sperrspannung führt wegen der höheren Spannungsfestigkeit nicht zu einem elektrischen Durchbruch. Gleichzeitig kann die Ausdehnung des Verformungskörpers bei seiner Herstellung mit Hilfe eines Ätzverfahrens verringert werden, weil ein wirksamer Ätzstop erfolgt.

Besonders zweckmäßig ist es, den Halbleitersensor so zu gestalten, daß der Verformungskörper flächenförmig ausgebildet ist. Es ist ferner vorteilhaft, wenn der Teilbereich und der weitere Bereich durch sich parallel zu der Hauptebene des Verformungskörpers erstreckende Schichten gebildet sind.

Ein derartiger Halbleitersensor zeichnet sich durch seine einfache Herstellbarkeit aus. So ist es möglich, bei einem epitaktischen Aufwachsen der Schichten durch eine Variation des Dotierstoffgehalts in der zugeführten Gasatmosphäre den Dotierstoffgehalt zwischen den übereinanderliegenden Schichten zu variieren.

Wenn der freiliegende Teilbereich durch einen Oberflächenbereich begrenzt ist, der an einem Grundkörper anliegt, ist das Konzentrationsgefälle zwischen dem Verformungskörper und dem an ihm anliegenden Grundkörper besonders hoch. Dieses Konzentrationsgefälle führt bei der Herstellung von freitragenden Bereichen des Verformungskörpers durch einen Abtragprozeß, beispielsweise einem elektrochemischen Tiefenätzprozeß, zu einem optimalen Ätzstopp. Eine oder mehrere obere Schichten werden zur Eingrenzung des elektrischen Feldes zwischen ihnen und der bzw. den piezoresistiven Widerstandsbahnen höher dotiert.

Eine besonders einfach herstellbare Ausführungsform eines erfindungsgemäßen Halbleitersensors zeichnet sich dadurch aus, daß der Verformungskörper zwei Schichten aufweist, wobei die erste Schicht den Teilbereich bildet, die zweite Schicht den weiteren Bereich bildet, und die zweite Schicht an der piezoresistiven Widerstandsbahn anliegt.

Ein Halbleitersensor, bei dem die Dicke des Verformungskörpers weiter reduziert ist, zeichnet sich dadurch aus, daß der Verformungskörper drei Schichten aufweist, wobei die erste Schicht den Teilbereich bildet, die zweite Schicht an der piezoresistiven Widerstandsbahn anliegt, und der weitere Bereich durch die sich zwischen der ersten und der zweiten Schicht befindende dritte Schicht gebildet ist.

Um eine möglichst geringe Dicke des Verformungskörpers mit einer möglichst hohen Spannungsfestigkeit zu kombinieren, ist es vorteilhaft, daß die Konzentration des Dotierstoffs in dem Bereich mit der höchsten Konzentration wenigstens um den Faktor 10 höher ist als in dem Bereich mit der niedrigsten Konzentration.

Um eine möglichst geringe Dicke des Verformungskörpers zu erreichen, beträgt die Dicke des Bereichs mit der höchsten Konzentration weniger als 10 µm.

Die erfindungsgemäßen Halbleitersensoren können als Drucksensoren ausgebildet sein, was zweckmäßigerweise dadurch geschieht, daß der Verformungskörper in seinem Randbereich mit dem Grundkörper verbunden ist.

In diesem Fall ist der Verformungskörper vorzugsweise als eine dünne Membran ausgebildet. Der Verformungskörper kann hierbei die Form einer Kreisplatte, einer Kreisringplatte mit biegesteifem Zentrum, einer Rechteckplatte und einer Rechteckplatte mit biegesteifem Zentrum aufweisen. Jede dieser Plattengeometrien weist ein spezifisches zugehöriges mechanisches Spannungsverhalten auf. Zweckmäßigerweise sind die piezoresistiven Widerstandsbahnen in den Bereichen angeordnet, in denen eine besonders hohe mechanische Spannung auftritt. Hierdurch führt bereits eine kleine Auslenkung des Drucksensors zu einer detektierbaren elektrischen Spannung.

Die erfindungsgemäßen Halbleitersensoren können jedoch auch Beschleunigungssensoren bilden. Dies geschieht in besonders zweckmäßiger Weise dadurch, daß der Verformungskörper abschnittsweise mit einer Wand des Grundkörpers in Kontakt steht, und auf der gegenüberliegenden Seite des Verformungskörpers eine seismische Masse angeordnet ist. Somit ist der Verformungskörper nur abschnittsweise mit dem Grundkörper verbunden. An wenigstens einem weiteren Abschnitt ist eine seismische Masse mit dem Verformungskörper verbunden.

Das Funktionsprinzip von Beschleunigungssensoren beruht darauf, daß von außen auf eine Sensormasse einwirkende Beschleunigungen eine Kraft erzeugen, die über den Sensormechanismus in ein elektrisches Signal umgewandelt wird. Bei diesem piezoresistiven Beschleunigungssensor wird die mechanische Spannung infolge des piezoresistiven Effekts in eine Änderung des spezifischen Widerstandes umgewandelt. In weiten Verformungsbereichen ist die Widerstandsänderung proportional zur Beschleunigung. Während bei einem Drucksensor durch den Tiefenätzprozeß eine geschlossene dünne Membran gebildet wird, wird für diesen mikromechanischen Beschleunigungssensor der Ätzprozeß so durchgeführt, daß der Verformungskörper die Form eines Steges aufweist.

Besonders zweckmäßig ist es, wenn die freiliegenden Oberflächen dieses Steges eine niedrige Dotierstoffkonzentration aufweisen. In diesem Falle sind die piezoresistiven Widerstände mit wenigstens einer Umhüllung aus einem Material mit einer höheren Dotierstoffkonzentration versehen, während die äußeren Oberflächen des Steges eine niedrigere Dotierstoffkonzentration aufweisen.

Weitere Vorteile und Besonderheiten der Erfindung ergeben sich aus der nachfolgenden Darstellung von bevorzugten Ausführungsbeispielen anhand der Zeichnungen.

Von den Zeichnungen zeigt
- **Fig. 1**: einen Querschnitt durch einen erfindungsgemäßen Drucksensor;
- **Fig. 2**: die Abhängigkeit der Dotierung von der Tiefe bei zwei Epitaxieschichten und
- **Fig. 3**: die Abhängigkeit der Dotierung von der Tiefe bei drei Epitaxieschichten.

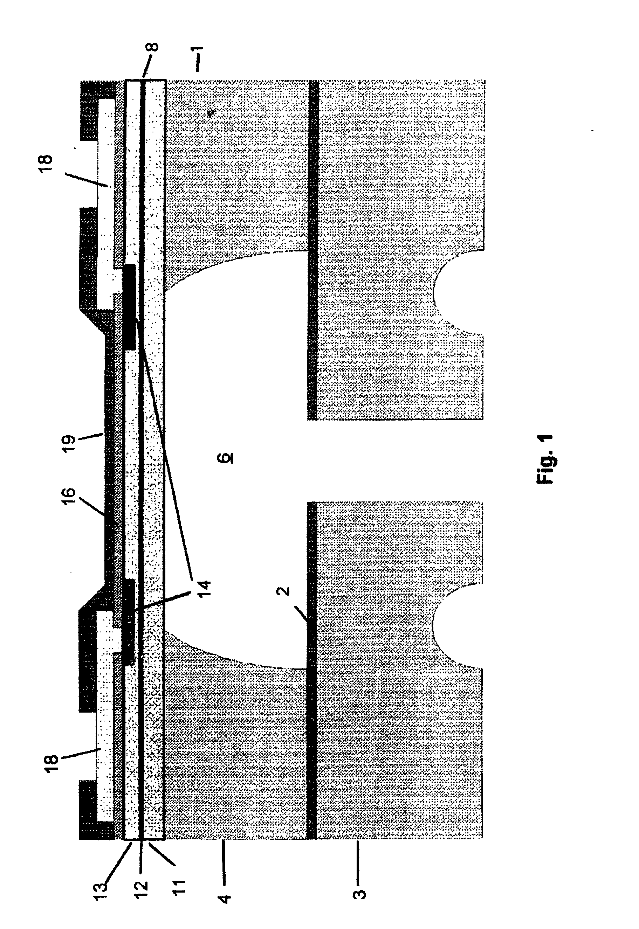

Der in **Fig. 1** dargestellte Drucksensor 1 ist ein Niederdrucksensor. Er ist über eine Goldverbindungsschicht 2 mit einem Trägerchip 3 verbunden. Der Grundkörper 4 des Drucksensors 1 wird durch ein mit Dotierstoffen des n-Typs dotiertes Substrat aus einkristallinem Silizium gebildet. Die Konzentration der Dotierstoffe im Grundkörper liegt bei wenigstens 5 x 10¹⁷ cm⁻³, vorzugsweise bei 3 x 10¹⁸ cm⁻³.

Der Grundkörper 4 weist eine große Ausnehmung 6 auf, die beispielsweise durch gezieltes Wegätzen des den Grundkörper 4 bildenden Substrats erzeugt wurde.

Auf dem Grundkörper 4 befindet sich der Verformungskörper 8, der durch drei auf dem Grundkörper 4 epitaktisch aufgewachsene Schichten 11, 12 und 13 gebildet wird.

Die unterste Schicht 11 ist eine einkristalline Siliziumschicht, deren Dotierung mit Dotierstoffen des n-Typs durch Phosphoratome der Konzentration 3 x 10¹⁴ cm⁻³ erfolgte. Die Dicke der Schicht 11 beträgt 3 µm.

Oberhalb der ersten epitaktischen Schicht 11 befindet sich eine weitere, 2 µm dicke, epitaktisch aufgewachsene Schicht 12 aus einkristallinem Silizium, die eine Dotierstoffkonzentration von 3 x 10¹⁵ cm⁻³ aufweist.

Die oberste Schicht 13, die gleichfalls aus epitaktisch aufgewachsenem Silizium besteht, ist 4 µm dick und weist eine Dotierstoffkonzentration des n-Typs von 3 x 10¹⁴ cm⁻³ auf.

In der obersten Schicht 13 befinden sich Piezowiderstände 14, die mit Dotierstoffen des p-Typs einer Konzentration von wenigstens 1 x 10¹⁷ cm⁻³, vorzugsweise der Konzentration 3 x 10¹⁸ cm⁻³ dotiert sind. Durch die Ausbildung einer Sperrspannung zwischen den Piezowiderständen 14 und der Schicht 13 erfolgt nur durch die Piezowiderstände 14 ein Stromfluß.

Oberhalb der oberen Schicht 13 ist eine erste Abdeckschicht 16 aufgebracht. Die erste Abdeckschicht 16 ist abschnittsweise unterbrochen, um eine Verbindung der Piezowiderstände 14 mit Leiterbahnen 18 zu ermöglichen. Die Leiterbahnen 18 dienen zum Anschluß der Piezowiderstände 14 an nicht dargestellte äußere Kontakte. Auf der ersten Abdeckschicht und den zu schützenden Teilen der Leiterbahnen befindet sich eine weitere Abdeckschicht 19.

Ein derartiger Drucksensor kann wie folgt hergestellt werden:

Auf dem Grundkörper 4 wird die Schicht 11 durch ein CVD-Verfahren (Chemical-Vapour-Deposition), d.h. durch eine chemische Gasphasenabscheidung aufgebracht. Hierzu wird zuerst ein Reaktionsgas aus Chlorsilan: SiCl₂H₂ auf die Oberfläche des Grundkörpers transportiert. Auf der Oberfläche erfolgt eine mehrstufige Oberflächenreaktion, bestehend aus der Adsorption des Ausgangsstoffes, der chemischen Reaktion SiCl₂H₂ → Si + 2HCl und der Oberflächendiffusion des festen Reaktionsproduktes Silizium in einkristalliner Form. Das gasförmige Reaktionsprodukt HCl wird anschließend desorbiert. Danach wird das desorbierte gasförmige Reaktionsprodukt HCl abtransportiert.

Die durch das CVD-Verfahren erzeugte Schicht 11 aus einkristallinem Silizium weist die gleiche kristallographische Orientierung auf wie der Grundkörper 4 auf dem sie abgeschieden wurde. Die Kristallstruktur des Grundkörpers 4 wird beim Schichtwachstum fortgesetzt. Da der Grundkörper 4 durch ein massives einkristallines Substrat gebildet wird, handelt es sich bei der unteren Schicht 11 um eine epitaktische Schicht. Die Epitaxie der Siliziumschichten erfolgt bei Reaktionstemperaturen in der CVD-Anlage zwischen 1.000 und 1.280°C.

Durch die Zugabe eines phosphorhaltigen Gases zu dem Reaktionsgas wird die gewünschte Dotierstoffkonzentration von 3 x 10¹⁴ cm⁻³ erreicht.

Das epitaktische Aufwachsen der mittleren Schicht 12 ist eine Fortsetzung des Aufwachsens der unteren Schicht 11. Durch eine Erhöhung des Gehalts an einem Phosphor enthaltenden Gas im Reaktionsgas des CVD-Prozesses wird die gewünschte Dotierstoffkonzentration von 3 x 10¹⁵ cm⁻³ erreicht.

Die gleichfalls epitaktisch aufgewachsene obere Schicht 13 erhält gleichfalls durch eine entsprechende Zugabe von Phosphor zum Reaktionsgas eine Dotierstoffkonzentration von 3 x 10¹⁴ cm⁻³.

In der oberen Schicht 13 werden die Piezowiderstände 14 als piezoresistive Widerstandsbahnen durch gezielte Ionenimplantation von Dotierstoffen des p-Typs erzeugt. Die Piezowiderstände 14 weisen eine Konzentration des Dotierstoffs vom p-Typ von wenigstens 1 x 10¹⁷ cm⁻³, vorzugsweise von 3 x 10¹⁸ cm⁻³ auf.

Anschließend wird die erste Abdeckschicht 16 aufgebracht und durch ein Photolithographieverfahren strukturiert. Danach werden die Leiterbahnen 18 aufgebracht und strukturiert. Auf die Leiterbahnen 18 und die erste Abdeckschicht 16 wird schließlich die obere Abdeckschicht 19 aufgebracht und anschließend gleichfalls strukturiert.

Anschließend wird die Rückseite des Drucksensors 1 bearbeitet. Der wesentliche Verfahrensschritt hierbei ist ein selektiver Ätzprozeß, durch den der Grundkörper 4 im Bereich der Ausnehmung 6 bis zu der unteren Schicht 11 weggeätzt wird. Um einen wirksamen Ätzstop zu erzielen, ist ein hohes Konzentrationsgefälle der Dotierstoffe zwischen dem Grundkörper 4 und der unteren Schicht 11 erforderlich. Dieses Konzentrationsgefälle liegt bei den oben gennannten Konzentrationen der Dotierstoffe im Grenzbereich zwischen dem Grundkörper 4 und der Schicht 11 vor.

Der so hergestellte Halbleitersensor kann anschließend auf einem Trägerchip 3 aufgebracht werden. Hierzu wird auf den Trägerchip 3 zunächst eine Goldverbindungsschicht 2 aufgedampft. Die Goldverbindungsschicht 2 ermöglicht eine feste und dauerhafte Verbindung des Drucksensors 1 mit dem Trägerchip 3.

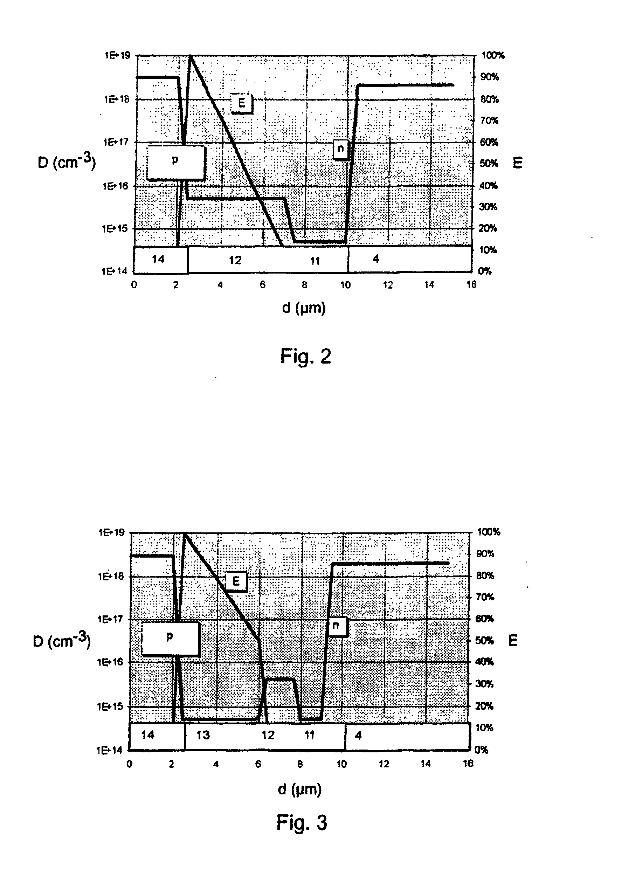

In **Fig. 2** ist die Dotierstoffkonzentration D (cm⁻³) bei zwei epitaktisch aufgewachsenen Schichten in Abhängigkeit von der Tiefe d (µm) aufgetragen. Der Piezowiderstand 14 weist eine Dotierstoffkonzentration vom p-Typ von 3 x 10¹⁸ cm⁻³ auf. Unterhalb des Piezowiderstandes 14 befindet sich eine Schicht 12, die mit Dotiestoffen des n-Typs in der Konzentration 3 x 10¹⁵ cm⁻³ dotiert ist. Die darunter liegende Schicht 11 ist mit Dotierstoffen vom n-Typ in der Konzentration 3 x 10¹⁴ cm⁻³ dotiert. Der Grundkörper 4, auf dem die Schichten 11 und 12 aufgebracht sind, weist eine Dotierstoffkonzentration des n-Typs von 3 x 10¹⁸ cm⁻³ auf.

Die in **Fig. 3** dargestellte Abhängigkeit der Dotierstoffkonzentration D (cm⁻³) bei drei epitaktisch aufgewachsenen Schichten in Abhängigkeit von der Tiefe d (µm) entspricht den bei einem Drucksensor nach **Fig. 1** auftretenden Werten.

Auch hierbei weist der Piezowiderstand 14 eine Dotierstoffkonzentration vom p-Typ von 3 x 10¹⁸ cm⁻³ auf. Unterhalb des Piezowiderstandes 14 befindet sich eine Schicht 13, die mit Dotierstoffen des n-Typs in der Konzentration 3 x 10¹⁴ cm⁻³ dotiert ist. Unterhalb der Schicht 13 befindet sich die Schicht 12, die mit Dotierstoffen vom n-Typ in der Konzentration 3 x 10¹⁵ cm⁻³ dotiert ist. Die darunter liegende Schicht 11 ist mit Dotierstoffen vom n-Typ in der Konzentration 3 x 10¹⁴ cm⁻³ dotiert. Der Grundkörper 4, auf dem die Schichten 11, 12 und 13 aufgebracht sind, weist eine Dotierstoffkonzentration des n-Typs von 3 x 10¹⁸ cm⁻³ auf.

Bei den dargestellten Ausführungsbeispielen sind der Grundkörper und die auf ihm befindlichen Schichten mit Dotierstoffen vom n-Typ dotiert, während die Piezowiderstände mit Dotierstoffen des p-Typs dotiert sind. Es ist jedoch gleichfalls möglich, daß der Grundkörper und die Schichten mit Dotierstoffen vom p-Typ dotiert sind, während die Piezowiderstände mit Dotierstoffen vom n-Typ dotiert sind.

Es ist auch möglich, daß auf einen Grundkörper, der mit Dotierstoffen vom p-Typ dotiert ist, Schichten aufgebracht sind, die mit Dotierstoffen des n-Typs dotiert sind. Das für das Zustandekommen eines Ätzstops bei der Bearbeitung der Rückseite des Drucksensors erforderliche Konzentrationsgefälle der Dotierstoffe zwischen dem Grundkörper 4 und der unteren Schicht 11 ist gewährleistet, wenn auf einen mit Dotierstoffen vom n-Typ hoch dotierten Grundkörper 4 eine niedrig dotierte Schicht wahlweise mit einer n-Typ- oder einer p-Typ-Dotierung folgt. Auch auf einen mit Dotierstoffen vom p-Typ hoch dotierten Grundkörper 4 kann eine niedrig dotierte Schicht 11 wahlweise vom n-Typ oder vom p-Typ folgen. Die dargestellten Ausführungsbeispiele beziehen sich auf die Ausgestaltung des erfindungsgemäßen Halbleitersensors als Drucksensor.

Es ist jedoch gleichfalls möglich, einen erfindungsgemäßen Halbleitersensor als Wandler, der eine mechanische Einwirkung in ein elektrisches Signal verwandelt, zu verwenden.

Ein Beispiel hierfür ist ein Beschleunigungssensor, bei dem eine Beschleunigung in eine Widerstandsänderung transformiert wird.

Ein erfindungsgemäßer Halbleitersensor kann beispielsweise auch als Feuchtigkeitssensor ausgebildet sein. Hierzu wird die beim Beschleunigungssensor vorhandene seismische Masse durch einen Körper mit einer großen Oberfläche ersetzt. Hierbei wird die Oberfläche so gestaltet, daß sie Flüssigkeitsmoleküle leicht absorbieren kann.

## Patentansprüche

1. Halbleitersensor mit einem Grundkörper (4) und wenigstens einem Verformungskörper (8), wobei
- der Verformungskörper (8) aus einem Halbleitersubstrat besteht, das mit einem Dotierstoff eines ersten Leitfähigkeitstyps dotiert ist,
- sich in dem Verformungskörper (8) wenigstens ein Piezowiderstand (14), der mit einem Dotierstoff mit entgegengesetztem Leitfähigkeitstyp dotiert ist, befindet, und
- der Verformungskörper (8) in wenigstens einem Teilbereich in Kontakt mit einem Medium steht,
**dadurch gekennzeichnet, daß** der Teilbereich eine niedrigere Konzentration des Dotierstoffs aufweist als ein zwischen ihm und dem Piezowiderstand (14) befindlicher weiterer Bereich.

2. Halbleitersensor nach Anspruch 1, **dadurch gekennzeichnet, daß** der Verformungskörper (8) flächenförmig ausgebildet ist.

3. Halbleitersensor nach einem der Ansprüch 1 oder 2, **dadurch gekennzeichnet, daß** der Teilbereich und der weitere Bereich durch sich parallel zu der Hauptebene des Verformungskörpers erstreckende Schichten (11, 12) gebildet sind.

4. Halbleitersensor nach einem der Ansprüche 1 bis 3, **dadurch gekennzeichnet, daß** der Verformungskörper zwei Schichten aufweist, wobei die erste Schicht (11) den Teilbereich bildet, die zweite Schicht (12) den weiteren Bereich bildet, und die zweite Schicht (12) an dem Piezowiderstand (14) anliegt.

5. Halbleitersensor nach einem der Ansprüche 1 bis 3, **dadurch gekennzeichnet, daß** der Verformungskörper (8) drei Schichten (11, 12, 13) aufweist, wobei die erste Schicht (11) den Teilbereich bildet, die zweite Schicht (13) an dem Piezowiderstand (14) anliegt, und der weitere Bereich durch die sich zwischen der ersten Schicht (11) und der zweiten Schicht (13) befindende dritte Schicht (12) gebildet ist.

6. Halbleitersensor nach einem der Ansprüche 1 bis 5, **dadurch gekennzeichnet, daß** die Konzentration des Dotierstoffs in dem Bereich mit der höchsten Konzentration wenigstens um den Faktor 10 höher ist als in dem Bereich mit der niedrigsten Konzentration.

7. Halbleitersensor nach einem der Ansprüche 1 bis 6, **dadurch gekennzeichnet, daß** die Dicke des Bereichs mit der höchsten Konzentration weniger als 10 µm beträgt.

8. Halbleitersensor nach einem der Ansprüche 1 bis 7, **dadurch gekennzeichnet, daß** der Verformungskörper (8) in seinem Randbereich mit dem Grundkörper (4) verbunden ist.

9. Halbleitersensor nach einem der Ansprüche 1 bis 7, **dadurch gekennzeichnet, daß** der Verformungskörper abschnittsweise mit einer Wand des Grundkörpers in Kontakt steht, und daß auf der gegenüberliegenden Seite des Verformungskörpers eine seismische Masse angeordnet ist.

## Claims

1. Semiconductor sensor having a base element (4) and at least one deformation element (8),
- the deformation element (8) being composed of a semiconductor substrate which is doped with a dopant of a first conductivity type,
- at least one piezoresistor (14) which is doped with a dopant of the opposite conductivity type being located in the deformation element (8), and
- the deformation element (8) being in contact with a medium in at least one part,
**characterized in that** the part has a lower concentration of the dopant than a further region located between it and the piezoresistor (14).

2. Semiconductor sensor according to Claim 1, **characterized in that** the deformation element (8) is of planar design.

3. Semiconductor sensor according to one of Claims 1 or 2, **characterized in that** the part and the further region are formed by layers (11, 12) which extend parallel to the main plane of the deformation element.

4. Semiconductor sensor according to one of Claims 1 to 3, **characterized in that** the deformation element has two layers, the first layer (11) forming the part, the second layer (12) forming the further region and the second layer (12) adjoining the piezoresistor (14).

5. Semiconductor sensor according to one of Claims 1 to 3, **characterized in that** the deformation element (8) has three layers (11, 12, 13), the first layer (11) forming the part, the second layer (12) adjoining the piezoresistor (14) and the further region being formed by the third layer (13) located between the first layer (11) and the second layer (12).

6. Semiconductor sensor according to one of Claims 1 to 5, **characterized in that** the concentration of the dopant in the region with the highest concentration is higher than in the region with the lowest concentration by at least a factor of 10.

7. Semiconductor sensor according to one of Claims 1 to 6, **characterized in that** the thickness of the region with the highest concentration is less than 10 µm.

8. Semiconductor sensor according to one of Claims 1 to 7, **characterized in that** the deformation element (8) is connected in its edge region to the base element (4).

9. Semiconductor sensor according to one of Claims 1 to 7, **characterized in that** certain sections of the deformation element are in contact with a wall of the base element, and that a seismic mass is arranged on the opposite side of the deformation element.

## Revendications

1. Capteur à semiconducteur ayant un corps (4) de base et au moins un corps (8) déformable, dans lequel
- le corps (8) déformable est en un substrat semiconducteur, qui est dopé par une substance de dopage d'un premier type de conductivité,
- il se trouve, dans le corps (8) déformable, au moins une résistance (14) piézo-électrique qui est dopée par une substance de dopage ayant le type de conductivité opposé, et
- le corps (8) déformable est, au moins dans une zone partielle, en contact avec un milieu,
**caractérisé en ce que** la zone partielle a une concentration plus basse de la substance de dopage que celle d'une autre zone se trouvant entre elle et la résistance (14) piézo-électrique.

2. Capteur à semiconducteur suivant la revendication 1, **caractérisé en ce que** le corps (8) déformable est de forme plane.

3. Capteur à semiconducteur suivant l'une des revendications 1 ou 2, **caractérisé en ce que** la zone partielle et l'autre zone sont formées par des couches (11, 12) s'étendant parallèlement au plan principal du corps déformable.

4. Capteur à semiconducteur suivant l'une des revendications 1 à 3, **caractérisé en ce que** le corps déformable a deux couches, la première couche (11) formant la zone partielle, la deuxième couche (12) formant l'autre zone et la deuxième couche (12) étant contigüe à la résistance (14) piézo-électrique.

5. Capteur à semiconducteur suivant l'une des revendications 1 à 3, **caractérisé en ce que** le corps (8) déformable a trois couches (11, 12, 13), la première couche (11) formant la zone partielle, la deuxième couche (13) étant contiguë à la résistance (14) piézo-électrique et l'autre zone étant formée par la troisième couche (12) se trouvant entre la première couche (11) et la deuxième couche (13).

6. Capteur à semiconducteur suivant l'une des revendications 1 à 5, **caractérisé en ce que** la concentration de la substance de dopage dans la zone ayant la concentration la plus grande est plus grande d'au moins le facteur 10 que celle dans la zone ayant la concentration la plus basse.

7. Capteur à semiconducteur suivant l'une des revendications 1 à 6, **caractérisé en ce que** l'épaisseur de la zone ayant la concentration la plus grande est inférieure à 10 µm.

8. Capteur à semiconducteur suivant l'une des revendications 1 à 7, **caractérisé en ce que** la zone marginale du corps (8) déformable est reliée au corps (4) de base.

9. Capteur à semiconducteur suivant l'une des revendications 1 à 7, **caractérisé en ce que** le corps déformable est en contact par parties avec une paroi du corps de base et **en ce que**, sur la face opposée du corps déformable, est placée une masse sismique.
